(19) Europäisches Patentamt
European Patent Office
Office européen des brevets

(11) Publication number: **0 140 431**
**B1**

(12) # EUROPEAN PATENT SPECIFICATION

(45) Date of publication of patent specification: **18.01.89**

(51) Int. Cl.$^4$: **G 02 B 6/12**

(21) Application number: **84201416.9**

(22) Date of filing: **04.10.84**

(54) **Component for an integrated optical system.**

(30) Priority: **07.10.83 NL 8303446**

(43) Date of publication of application:
**08.05.85 Bulletin 85/19**

(45) Publication of the grant of the patent:
**18.01.89 Bulletin 89/03**

(84) Designated Contracting States:
**CH DE FR GB IT LI NL SE**

(58) References cited:
**US-A-3 563 630**
**US-A-3 764 195**

(73) Proprietor: **N.V. Philips' Gloeilampenfabrieken**
**Groenewoudseweg 1**
**NL-5621 BA Eindhoven (NL)**

(72) Inventor: **Haisma, Jan**
**c/o INT. OCTROOIBUREAU B.V. Prof. Holstlaan 6**
**NL-5656 AA Eindhoven (NL)**
Inventor: **Robertson, John Mackay**
**c/o INT. OCTROOIBUREAU B.V. Prof. Holstlaan 6**
**NL-5656 AA Eindhoven (NL)**
Inventor: **van der Werf, Pieter**
**c/o INT. OCTROOIBUREAU B.V. Prof. Holstlaan 6**
**NL-5656 AA Eindhoven (NL)**

(74) Representative: **Koppen, Jan et al**
**INTERNATIONAAL OCTROOIBUREAU B.V. Prof. Holstlaan 6**
**NL-5656 AA Eindhoven (NL)**

**EP 0 140 431 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a component for an integrated optical system, in particular for guiding electromagnetic radiation in the visible and/or infrared wavelength range, comprising a substrate with a refractive index $n_1$, a dielectric layer with refractive index $n_2$ on said substrate and an optical waveguide layer with refractive index $n_3$ on said dielectric layer, whereby $n_1$ and $n_3$ both are larger than $n_2$.

Such a component is known from the American Patent Specification 3.563.630. Herein a rectangular waveguide compound is described, comprising a substrate of a semiconductor material such as silicon, a metal or a dielectric, on which substrate a dielectric layer is disposed having index of refraction $n_1$. On top of the dielectric layer a strip or ribbon of a dielectric material having index of refraction $n_2$ is disposed. The index of refraction $n_2$ should be greater than $n_1$ at the wavelength of the light being guided.

The known waveguide component has the disadvantage that the substrate and the two layers are polycrystalline, which introduces light losses in the waveguide ribbon, due to scattering. Furthermore, for telecommunication components a lifetime of about 30 years is required, which requirement is not met by the known component, due to its sensitiveness to moisture. These drawbacks have to be circumvented by the present invention.

Therefore it is an object of the present invention to provide a component for an integrated optical system which is stable and moisture resistant for a long time.

These objects are arrived at with a component for an integrated optical system as described in the opening paragraph, which is further characterized in that the substrate is monocrystalline having a garnet structure, that the dielectric layer is a monocrystalline layer having a garnet structure applied by means of epitaxial growth onto said substrate and that the optical waveguide layer is a monocrystalline layer having a garnet structure deposited by epitaxial growth onto said dielectric layer.

Optical devices consisting of only one single crystal rare earth garnet film deposited by epitaxial growth on a garnet substrate are known per se and described in for instance US patent specification 3.764.195. Optical waveguide experiments are furthermore known from "Magnetic Bubble Technology: Integrated-Circuit Magnetics for Digital Storage and Processing", edited by H. Chang, IEEE PRESS Selected Reprint Series, New York 1975, pp. 111—116, in which light waves in the wavelength range between 1 and 5 µm were propagated in $Eu_3Ga_5O_{12}$ layers which had been grown epitaxially on $Gd_3(Sc_2Al_3)O_{12}$ substrates. Experiments are furthermore known from the above-mentioned paper which relate to the switching and modulation of radiation of a He—Ne laser in a magneto-optically active waveguide which comprised a

$$Y_3(Ga_{1.1}Sc_{0.4}Fe_{3.5})O_{12}$$

layer (n=2.1) grown on a $Gd_3Ga_5O_{12}$ substrate (n=1.94±0.02).

In order to be able to fulfil its light conductive function, the waveguide layer must have a refractive index which is higher than that of the material surrounding the layer. This is realised in the above-known (passive) optical waveguides in that an $R_3Ga_5O_{12}$ layer (n=1.94±0.02) is grown on a $R_3(Sc_2Al_3)O_{12}$ substrate (n=1.87±0.02), where R represents a rare metal ion. A first disadvantage thereof is that $R_3(Sc_2Al_3)O_{12}$ has to be used as the substrate material, as $Gd_3Ga_5O_{12}$ cannot be used as a substrate due to its refractive index (n=1.945) which is too high with respect to the other waveguide layer $R_3Ga_5O_{12}$ materials. $Gd_3Ga_5O_{12}$ is at this moment the only garnet single crystal of a high-grade physical-optical quality which is grown by means of the Czochralski method on a technical scale suitable for mass production. A second disadvantage is that the difference between the refractive indices of the waveguide layer and of the substrate is comparatively small so that the waveguide function of the layer is not optimal. With regard to the above-known magneto-optically active waveguide, any disadvantage similar to those mentioned above do not apply or only apply to a smaller extent. However, the use of

$$Y_3(Ga_{1.1}Sc_{0.4}Fe_{3.5})O_{12}$$

as a material for the magneto-optically active layer involves the disadvantage that the magnetic and magneto-optical properties, the optical absorption and the lattice constant which a material of that composition has, are to be accepted.

The present invention provides as it were a substrate having an improved interface, as a result of which on the one hand the possibility is created of using $Gd_3Ga_5O_{12}$ as a material for the substrates in combination with $R_3Ga_5O_{12}$ waveguide layers in passive waveguide components, and on the other hand it is possible by varying the composition of the waveguide layer material to produce the properties of the waveguide layers in (magneto-optically) active waveguide components having the properties required for specific applications.

A preferred form of the component in accordance with the invention is characterized in that when a $Gd_3Ga_5O_{12}$ substrate is used, the intermediate dielectric layer consists of a material which satisfies the general composition

$$R_3Sc_xAl_{5-x}O_{12}$$

wherein in particular R=Y or Gd and $0<x<5$. More particularly the dielectric layer has the composition

$Y_3Sc_2Al_3O_{12}$ (n~1.8).

Dielectric layers of the above-mentioned composition have a lattice constant which is matched to the lattice constant of $Gd_3Ga_5O_{12}$.

In connection with its high transparency for electromagnetic radiation in the visible and infrared ranges, $Gd_3Ga_5O_{12}$ is very suitable material for a (passive) wave guide layer. When grown on a dielectric layer of

$$R_3Sc_xAl_{5-x}O_{12}$$

(wherein R is Y or a rare earth metal constituent, in particular Y and Gd being good choices in produce, $Gd_3Ga_5O_{12}$ layers have very good waveguide properties due to the comparatively large difference in refractive index between the dielectric and light conductor layers.

An embodiment of the invention will be described hereinafter with reference to the drawing in which:

Figs. 1, 2 and 3 show successive steps in a method of making a multilayer light conductor structure according to the invention, and

Fig. 4 is a side elevation of a thin film waveguide component according to the invention.

A special construction of a passive waveguide is a beam splitter.

As is known, optical systems which are formed from single optically insulated fibres are used for transmitting information by means of a light signal, the fibres being connected to a light conductor in a previously determined ordering. In particular in logic systems, it is sometimes necessary when transmitting the information to distribute a part of the information-carrying light radiation between various channels. For this purpose a branched light conductor or splitter may be used which is shown in its simplest form in Fig. 3. The following procedure is used to reach the Fig. 3 configuration.

A dielectric layer 2 of $Y_3Sc_2Al_3O_{12}$ (thickness, for example, between 0.1 and 5 µm) is deposited by means of epitaxy from the liquid phase on a substrate 1 of monocrystalline $Gd_3Ga_5O_{12}$ (thickness for example 200 µm). $Y_3Sc_2Al_3O_{12}$ has a lattice constant which substantially matches to that of $Gd_3Ga_5O_{12}$. A layer 3 of $Gd_3Ga_5O_{12}$ (thickness, for example, between 1 and 50 µm) is deposited on the layer 2 by means of epitaxy from the liquid phase. Layer 3 has a refractive index $n_3$ which is considerably larger than the refractive index $n_2$ of layer 2 ($n_3=1.94$; $n_2=1.8$: these values apply at a wavelength $\lambda$ of 1.15 µm) and may hence serve as a waveguide (Fig. 3). In order to realize a main conductor structure 5 with a branch in the layer 3, an auxiliary structure 4 of aluminium is provided on the layer 3 by photolithographic processes (Fig. 2). The auxiliary structure 4 is transferred to the layer 3 by sputtering or reactive ion etching, so that the light conductor structure 5 of $Gd_3Ga_5O_{12}$ remains on the dielectric layer 2 (Fig. 3). The structure 5 may serve as an beam splitter. A wet chemical etching process may be applied to the layer combination of Fig. 2 instead of sputtering or reactive ion etching processes. In that case the auxiliary structure 4 should consist of a material which is not corroded by the wet chemical etchant.

Fig. 4 shows a waveguide component 10. It comprises a monocrystalline substrate 11 of $Gd_3Ga_5O_{12}$ on which a layer 12 of $Y_3Sc_2Al_3O_{12}$ is deposited in a manner analogous to that of Figs. 1, 2 and 3. A layer 13 of a material having a garnet structure and a higher refractive index than $Y_3Sc_2Al_3O_{12}$ is deposited on the layer 12. Dependent on the fact whether the layer 13 is to be passive or magneto-optically active, the material of the layer 13 is a rare earth metal-gallium garnet or a rare earth metal-iron garnet. The layer 13 has a thickness which is between 0.1 and 100 times, preferably between 1 and 10 times, the wavelength of the electromagnetic radiation which is guided through the layer 13. Coupling prisms 14 and 15 serve for coupling a beam of radiation 16 into and out of, respectively, the layer 13. The beam of radiation 16 is coherent and has a wavelength in the optical range of the spectrum (which comprises the visible range and the ranges immediately adjoining thereto). The beam of radiation 16 can be generated, for example, by means of a laser 17 (a He—Ne laser or a Ga—As laser). In the case when the layer 13 has (magnetic) optically active properties, the region 18 of the layer 13 can be influenced by means of an electric or a magnetic field, which results in a modulation of the beam of radiation 16. The coupled-out radiation is applied to a processing device 19.

## Claims

1. A component for an integrated optical system, in particular for guiding electromagnetic radiation in the visible and/or infrared wavelength range, comprising a substrate (1, 11) with a refractive index $n_1$, a dielectric layer (2, 12) with refractive index $n_2$ on said substrate and an optical waveguide layer (3, 13) with refractive index $n_3$ on said dielectric layer, whereby $n_1$ and $n_3$ both are larger than $n_2$, characterized in that the substrate (1, 11) is monocrystalline having a garnet structure, that the dielectric layer (2, 12) is a monocrystalline layer having a garnet structure applied by means of epitaxial growth onto said substrate and that the optical waveguide layer (3, 13) is a monocrystalline layer having a garnet structure deposited by epitaxial growth onto said dielectric layer.

2. A component as claimed in Claim 1, characterized in that the substrate (1, 11) consists of a material having the composition $Gd_3Ga_5O_{12}$.

3. A component as claimed in Claim 2, characterized in that the dielectric layer (2, 12) consists of a material of the general composition $R_3Sc_xAl_{5-x}O_{12}$, wherein R is Y or a rare earth metal constituent, and $0<x<5$.

4. A component as claimed in Claim 3, characterized in that R is Y or Gd.

5. A component as claimed in any of Claims 3 and 4, characterized in that the waveguide layer (3, 13) consists of a material of the composition $R_3Ga_5O_{12}$, wherein R is Y or a rare earth metal constituent.

6. A component as claimed in Claim 5, characterized in that R is Gd.

**Patentansprüche**

1. Komponente für ein integriertes optisches System insbesondere zum Leiten elektromagnetischer Strahlung in dem sichtbaren und/oder IR-Wellenlängenbereich mit einem Substrat (1, 11) mit einer Brechzahl $n_1$, einer dielektrischen Schicht (2, 12) mit einer Brechzahl $n_2$ auf diesem Substrat und mit einer optischen Wellenleiterschicht (3, 13) mit einer Brechzahl $n_3$ auf der dielektrischen Schicht, wobei $n_1$ und $n_3$ beide grösser sind als $n_2$, dadurch gekennzeichnet, dass das Substrat (1, 11) monokristallin ist mit einer Granatstruktur, dass die dielektrische Schicht (2, 12) eine monokristalline Schicht ist mit einer Granatstruktur, die epitaxial auf dem Substrat angewachsen ist und dass die optische Wellenleiterschicht (3, 13) eine monokristalline Schicht ist mit einer Granatstruktur, die epitaxial auf der dielektrischen Schicht angewachsen ist.

2. Komponente nach Anspruch 1, dadurch gekennzeichnet, dass das Substrat (1, 11) aus einem Material besteht mit der Zusammensetzung $Gd_3Ga_5O_{12}$.

3. Komponente nach Anspruch 2, dadurch gekennzeichnet, dass die dielektrische Schicht (2, 12) aus einem Material besteht mit der allgemeinen Zusammensetzung ($R_3Sc_xAl_{5-x}O_{12}$, wobei R ist Y oder eine seltene Erdmetallkomponente und $0<x<5$ ist.

4. Komponente nach Anspruch 3, dadurch gekennzeichnet, dass R ist Y oder Gd.

5. Komponente nach einem der Ansprüche 3 und 4, dadurch gekennzeichnet, dass die Wellenleiterschicht (3, 13) aus einem Material mit der folgenden Zusammensetzung besteht $R_3Ga_5O_{12}$, wobei R ist Y oder eine seltene Erdmetallkomponente.

6. Komponente nach Anspruch 5, dadurch gekennzeichnet, dass R ist Gd.

**Revendications**

1. Composant pour un circuit optique intégré notamment pour le guidage de rayonnement électromagnétique dans la gamme de longueurs d'onde visibles et/ou infrarouges, comportant un substrat (1, 11) présentant un indice de réfraction $n_1$, une couche diélectrique (2, 12) présentant un indice de réfraction $n_2$ sur ledit substrat et une couche de guidage d'ondes optiques (3, 13) présentant un indice de réfraction $n_3$ sur ladite couche diélectrique, $n_1$ et $n_3$ étant tous les deux supérieurs à $n_2$, caractérisé en ce que le substrat (1, 11) est monocristallin et présente une structure de grenat, la couche diélectrique (2, 12) est une couche monocristalline présentant une structure de grenat appliquée par croissance épitaxiale sur ledit substrat et la couche de guidage d'ondes optiques (3, 13) est une couche monocristalline présentant une structure de grenat appliquée par croissance épitaxiale sur ladite couche diélectrique.

2. Composant selon la revendication 1, caractérisé en ce que le substrat (1, 11) est constitué par un matériau présentant la composition $Gd_3Ga_5O_{12}$.

3. Composant selon la revendication 2, caractérisé en ce que la couche diélectrique (2, 12) est constituée par un matériau présentant la composition générale $R_3Sc_xAl_{5-x}O_{12}$, dans laquelle R est Y ou un composant de métal des terres rares et $0<x<5$.

4. Composant selon la revendication 3, caractérisé en ce que R est Y ou Gd.

5. Composant selon l'une des revendications 3 et 4, caractérisé en ce que la couche de guidage d'onde (3, 13) est constituée par un matériau de la composition $R_3Ga_5O_{12}$ dans laquelle R est Y ou un composant de métal des terres rares.

6. Composant selon la revendication 5, caractérisé en ce que R est Gd.

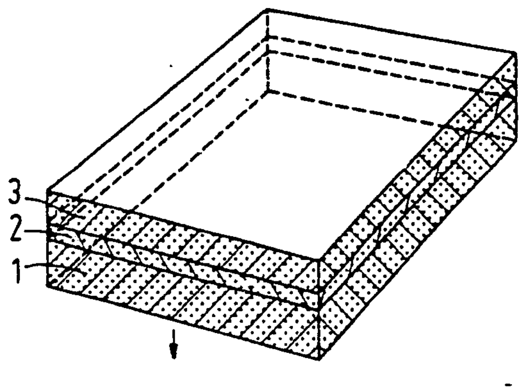


FIG.1

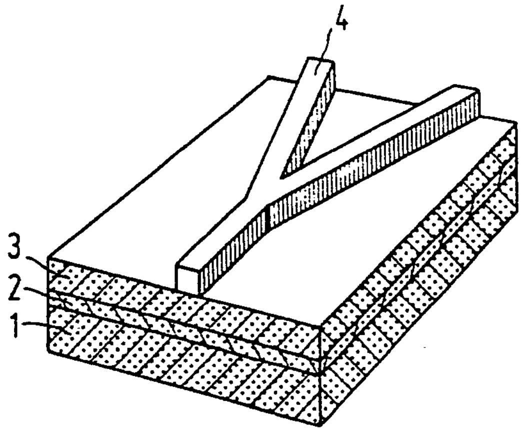


FIG.2

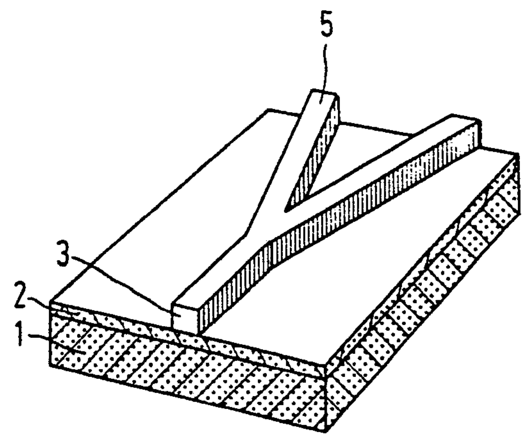


FIG.3

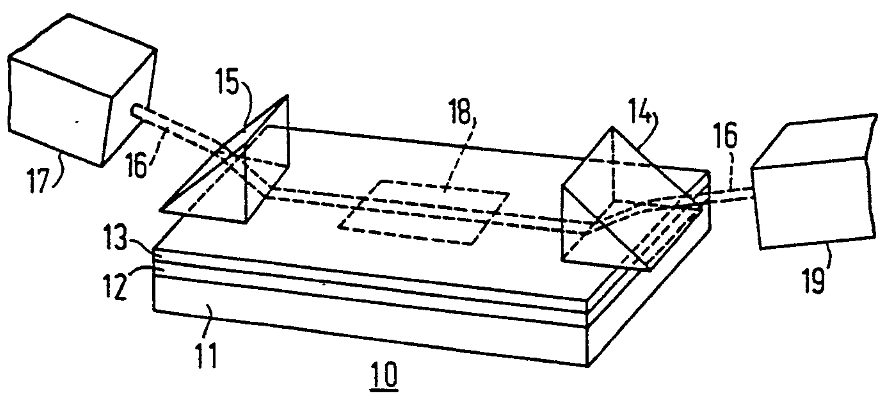


FIG.4